(19) Europäisches Patentamt
European Patent Office
Office européen des brevets

(11) Veröffentlichungsnummer: **0 002 261**
**B1**

(12) **EUROPÄISCHE PATENTSCHRIFT**

(45) Veröffentlichungstag der Patentschrift: **07.04.82**

(51) Int. Cl.³: **C 07 F 9/48**, C 08 K 5/53

(21) Anmeldenummer: **78101493.1**

(22) Anmeldetag: **01.12.78**

(54) **Alkylierte 2,2'-Biphenylen-phosphonite und mit deren Hilfe stabilisierte Gemische.**

(30) Priorität: **05.12.77 US 857167**

(43) Veröffentlichungstag der Anmeldung:
**13.06.79 Patentblatt 79/12**

(45) Bekanntmachung des Hinweises auf die Patenterteilung:
**07.04.82 Patentblatt 82/14**

(84) Benannte Vertragsstaaten:
**BE DE FR GB**

(56) Entgegenhaltungen:
**US - A - 3 702 878**

**CHEMICAL ABSTRACTS, Vol. 88, Nr. 38481n, 1978**
**Columbus, Ohio, USA**
**MITTERHOFER F. "Stabilizers for polyethylene", Seite 24**

(73) Patentinhaber: **CIBA-GEIGY AG**
**Patentabteilung Postfach**
**CH-4002 Basel (CH)**

(72) Erfinder: **Spivack, John D.**
**1 Blue Jay Street**
**Spring Valley New York 10977 (US)**

(74) Vertreter: **Zumstein sen., Fritz, Dr. et al,**
**Bräuhausstrasse 4**
**D-8000 München 2 (DE)**

EP 0 002 261 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Alkylierte 2,2'-Biphenylen-phosphonite und mit deren Hilfe stabilisierte Gemische

Organische Polymere wie Kunststoffe, Harze, Schmier- und Mineralöle sind dem thermischen und oxidativen Abbau, sowie der Zersetzung durch Licht unterworfen. Es sind eine grosse Anzahl Stabilisatoren für die verschiedenen Substrate bekannt. Ihre Wirksamkeit ist abhängig sowohl von der Ursachen der Zersetzung als auch von der Art des stabilisierten Substrates. Es wurde festgestellt, dass Stabilisatoren, welche wirksame Langzeit-Antioxidantien sind, relativ unwirksam in Prozessen sind, wo die thermische Stabilisierung des Substrates für kurze Zeit, aber bei relativ hohen Temperaturen gewünscht wird. Viele Stabilisatoren sind unverträglich mit dem Substrat, das Probleme verursachen kann und verringert auch ihre Wirksamkeit. Bei manchen Stabilisatoren erlaubt ihre Leichtflüchtigkeit oder ihre thermische bzw. hydrolytische Unbeständigkeit den praktischen Einsatz nicht.

Die Phosphonite der vorliegenden Erfindung besitzen eine ungewöhnliche Kombination der gewünschten Eigenschaften gegenüber dem Stand der Technik. Dadurch sind diese Phosphonite besonders wirksam und brauchbar als Stabilisatoren. Der Stand der Technik beschreibt sterisch unbehinderte 2,2'-Biphenylen-phenylphosphonite (J. Am. Chem. Soc. *88*, 168—9 (1966) und 2,2'-Methylen-bis-(di-alkylphenyl)-phenylphosphonite (US 3.297.631). Die letzteren sind Antioxydantien für Polyolefine, insbesondere für Polypropylen.

Die Phosphonite der gegenwärtigen Erfindung sind weit wirksamer als die genannten, insbesondere als Verarbeitungsstabilisatoren für Polyolefine und andere Substrate.

Die vorliegende Erfindung betrifft alkylierte 2,2'-Biphenylen-phosphonite und mit deren Hilfe stabilisiertes polymeres und monomeres organisches Material. Insbesondere betrifft es Phosphonite der Formel

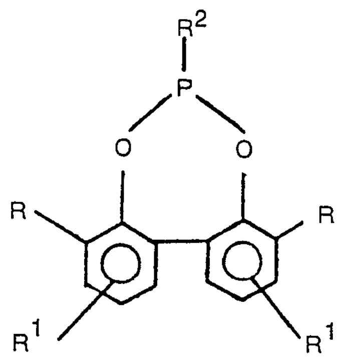

(I)

worin R $C_1$—$C_{18}$ Alkyl, $R^1$ Wasserstoff oder $C_1$—$C_{18}$ Alkyl und $R^2$ $C_1$—$C_{18}$ Alkyl, Phenyl mit 1 bis 3 Alkylgruppen substituiertes Phenyl, wobei die Alkylgruppen 1 bis 8 C-Atome enthalten, oder eine Gruppe der Formel

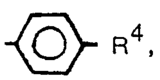, 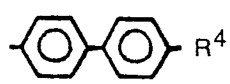 oder 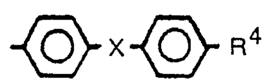 ,

worin $R^4$ die Formel

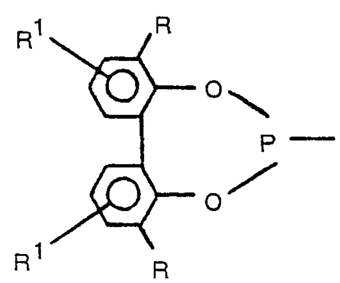

und X = O oder S bedeutet.

R ist vorzugsweise ein geradkettiges oder verzweigtes Alkyl mit 1 bis 8 C-Atomen, z.B. Methyl, Aethyl, n-Propyl, i-Propyl, n-Butyl, sec.-Butyl, t-Butyl, 2-Aethylhexyl, n-Octyl und t-Octyl. α-Verzweigte Alkyl-Radikale mit 3 bis 8 C-Atomen sind bevorzugt. Besonders bevorzugt ist t-Butyl und t-Octyl.

Ebenfalls besonders bevorzugt ist, wenn $R^1$ zu Sauerstoff in p-Stellung steht und t-Alkyl bedeutet.

$R^1$ kann Wasserstoff oder $C_1$—$C_8$ Alkyl bedeuten. Bevorzugt ist ein geradkettiges oder verzweigtes Alkyl mit 1 bis 8 C-Atomen, z.B. Methyl, i-Propyl, t-Butyl, t-Amyl, n-Octyl und t-Octyl. Besonders bevorzugt ist t-Alkyl mit 4 bis 8 C-Atomen, z.B. t-Butyl.

$R^2$ kann $C_1$—$C_{18}$ Alkyl sein, z.B. Methyl, Aethyl, Butyl, Hexyl, Heptyl, Octyl, Decyl, Dodecyl, Hexadecyl, Octadecyl, etc., oder kann Phenyl oder Alkyl-substituiertes Phenyl bedeuten, wie Tolyl, Xylyl,

Mesityl, Aethylphenyl, Butylphenyl, 3,5-Dibutylphenyl, p-Octylphenyl, 3,5-Dioctylphenyl etc., oder eine Gruppe

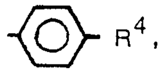 , 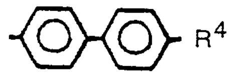 und 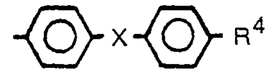 ,

worin $R^4$ eine Phosphonit-Gruppe, wie oben beschrieben ist und X = O und S bedeutet. Bevorzugt ist $R^2$ Phenyl oder Alkyl-substituiertes Phenyl mit 1 bis 3 C-Atomen in der Alkyl-Gruppe.

Die alkylierten 2,2'-Biphenylen-phosphonite der vorliegenden Erfindung werden durch die Reaktion von 2,2'-Dihydroxy-biphenylen mit Dichlor-phenylphosphin, worin das Phenyl unsubstituiert oder in der oben beschriebenen Weise substituiert ist, in Gegenwart eines Lösungsmittels, hergestellt.

Das Lösungsmittel ist vorzugsweise eine aromatische Verbindung, z.B. Benzol, Toluol, Xylol etc. Die Reaktion kann in der Gegenwart oder in der Abwesenheit eines Protonakzeptors, wie ein tertiäres Amin, z.B. Triäthylamin, Pyridin, N,N-Di-methylanilin etc. ausgeführt werden. Die Reaktionstemperatur kann im Bereich von Raumtemperatur bis zur Rückflusstemperatur des jeweiligen Lösungsmittels liegen.

Die Verbindungen der vorliegenden Erfindung sind wirksame Antioxydantien und Lichtschutzmittel für eine grosse Anzahl von organischen Polymeren. Beispiele für solche Polymeren sind:

1. Polymere, die sich von Mono- und Diolefinen ableiten, wie polyaethylen, das gegebenenfalls vernetzt sein kann, Polypropylen, Polyisobutylen, Polymethylbuten-1, Polymethylpenten-1, Polyisopren, Polybutadien.
2. Mischungen der unter 1 genannten Homopolymeren, wie z.B. Gemische von Polypropylen und Polyäthylen, Polypropylen und Polybuten-1, Polypropylen und Polyisobutylen.
3. Copolymere der dem unter 1 genannten Homopolymeren zugrundeliegenden Monomeren, wie Aethylen-Propylen-Copolymere, Propylen-Buten-1-Copolymere, Propylen-Isobutylen-Copolymere, Aethylen-Buten-1-Copolymere, sowie Terpolymere von Aethylen und Propylen mit einem Dien, wie z.B. Hexadien, Dicyclopentadien oder Aethylidennorbornen.
4. Polystyrol und seine Copolymeren, wie SAN, ABS, IPS, ASA und EP modifizierte Styrolcopolymerisate.
5. Halogenhaltige Vinyl-Polymere.
6. Polyurethane und Polyurea.
7. Polycarbonate.
8. Polyamide.
9. Polyester.

Die Verbindungen der vorliegenden Erfindung sind besonders wirksam als Stabilisatoren für organische Stoffe, wie z.B. Kunststoffe, Polymere, Harze sowie Erdöl und synthetische Flüssigkeiten, wie Schmieröle und Zirkulationsöle etc.

Die erfindungsgemässen Verbindungen eignen sich insbesondere für das Stabilisieren von Polyolefinen, wie z.B. Polyäthylen, Polypropylen, Polybuten-1, Polypenten-1, Poly(3-methylbuten-1), Poly(4-methylpenten-1), verschiedene Aethylen-Propylen-Copolymere usw.

Andere Substrate, in denen die erfindungsgemässen Verbindungen besonders wirksam sind, sind Polystyrol, incl. schlagfestes Polystyrol, ABS, SBR, Polyisopren sowie Kautschuk, Polyester incl. Polyäthylenterephthalat und Polybutylenterephthalat sowie ihre Copolymere. Weiterhin können auch Polyurethane, Polycarbonate, Polyamide, wie Nylon 6, 6/6 und ähnliche sowie Copolyamide stabilisiert werden.

Die Verbindungen der vorliegenden Erfindung können entweder als Antioxydantien oder als Lichtschutzmittel verwendet werden oder sie können gleichzeitig beide Funktionen ausüben. Die Stabilisatoren können gegebenenfalls mit anderen Zusätzen kombiniert werden, wie phenolische Antioxydantien, Gleitmittel wie Ca-stearat, Pigmente, Farbstoffe, UV-Absorber, sterisch gehinderte Amine als Lichtschutzmittel, Metalldesaktivatoren, Talk und andere Füllstoffe.

Im allgemeinen werden die erfindungsgemässen Stabilisatoren in 0,01 bis 5 Gew.-%, bezogen auf den stabilisierten Kunststoff, verwendet, wobei die Menge je nach Substrat und Anwendung verschieden sein kann. Bevorzugt ist 0,05 bis 2 Gew.-%, besonders bevorzugt ist 0,1 bis 1 Gew.-%.

Die mit den erfindungsgemässen Verbindungen stabilisierten Kunststoffe zeichnen sich durch relativ geringe Verfärbung bei der Verarbeitung bei hohen Temperaturen aus. Die Verfärbung ist auch dann noch gering, wenn das Polymer mehrmals extrudiert wird. Polymere, die diese Eigenschaft besonders deutlich zeigen sind: Polypropylen, Polyäthylen, Styrol-Copolymeren, wie ABS, Polyäthylen- und Polybutylenterephthalat, Polycarbonat, Kautschuk, synthetische Elastomere wie SBR.

Die erfindungsgemässen Stabilisatoren sind auch in Abwesenheit von Co-Stabilisatoren, wie phenolische Antioxydantien, wirksam für Polyolefine, ganz im Gegensatz zu zahlreichen Verbindungen, die üblicherweise verwendet werden.

Viele Verbindungen der vorliegenden Erfindung besitzen nebst verarbeitungsstabilisierende auch lichtstabilisierende Wirkung. Letztere ist besonders wichtig für Kunstfasern, deren Verarbeitungstemperaturen extrem hoch liegen und deren Lichtstabilität Hauptanforderung ist.

Eine besonders wichtige Eigenschaft der Phosphor-(III)-ester ist, dass sie weder hygroskopisch

noch hydrolyse-empfindlich in Gegenwart von Lufteuchtigkeit während der Lagerung sind. Die hygroskopische Eigenschaft erschwert das gleichmässige Einarbeiten des Stabilisators in das Polymer. Letzteres wird klebrig und klumpig während des Vermischens. Die Hydrolyse während der Lagerung bewirkt, dass die Phosphorester-Stabilisatoren an Wirksamekit verlieren.

Die Verbindungen der Formel I können mühelos mit den üblichen Methoden in das organische Polymer eingearbeitet werden, und zwar in jeder beliebigen Phase während der Herstellung von Formstücken.

Das erfindungsgemäss stabilisierte Polymer kann weitere Additive, wie folgt, enthalten: Antioxydantien, UV-Absorber und Lichtschutzmittel, wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, des weiteren Nickelverbindungen, sterisch gehinderte Amine, Oxalsäurediamide, Metalldesaktivatoren, Phosphite, peroxidzerstörende Verbindungen, Polyamidstabilisatoren, basische Co-Stabilisatoren, Nukleierungsmittel oder sonstige Zusätze, wie Z.B. Weichmacher, Gleitmittel, Emulgatoren, Füllstoffe, Russ, Asbest, Kaolin, Talk, Glasfasern, Pigmente, optische Aufheller, Flammschutzmittel, Antistatica.

Ferner kann es Thiosynergisten, wie Dilauryl-thiodipropionat oder Distearyl-thiodipropionat enthalten.

Beispiel 1

(4,4',6,6'-Tetra-t-butyl-2,2'-biphenylen)-phenylphosphonit

7,12 g Dichlorophenylphosphin werden während 8 Minuten bei 25 bis 30°C zu einer Lösung bestehend aus 20,2 g Triäthylamin und 16,4 g 4,4',6,6'-Tetra-t-butyl-2,2'-biphenol in 10 ml wasserfreiem Benzol tropfenweise zugefügt. Zu dem entstehenden, dicken Reaktionsgemisch gibt man weitere 50 ml wasserfreies Benzol, um das Rühren zu erleichtern. Das Rühren wird fortgesetzt, zuerst 15 Minuten lang bei 30°C, dann 4 Stunden lang bei 65 bis 70°C. Das Triäthylaminhydrochlorid wird durch Filtration entfernt und das Produkt aus dem klaren Filtrat durch Einengen im Vakuum (0,3 mm bei 50 bis 60°C) isoliert. Das Produkt kirstallisiert aus dem Rückstand, der mit 150 ml Acetonitril und 50 ml Aethylacetat versetzt wurde. Die gebildeten weissen Kristalle schmelzen bei 166 bis 168°C.

Beispiel 2

(4,4',6,6'-Tetra-t-amyl-2,2'-biphenylen)-phenylphosphonit

Verfährt man wie in Beispiel 1 beschrieben, so erhält man das gewünschte Produkt als weisse Kristalle mit einem Schmelzpunkt von 96 bis 99°C.

Beispiel 3

(4,4'-Dimethyl-6,6'-di-t-butyl-2,2'-biphenylen)-phenylphosphonit

Verfährt man wie in Beispiel 1 beschrieben und verwendet die entsprechenden Reaktanten, so erhält man das obengenannte Produkt mit einem Schmelzpunkt von 156 bis 163°C.

Beispiel 4

(4,4'-Tetra-t-octyl-2,2'-biphenylen)-phenylphosphonit

Verfährt man wie in Beispiel 1 beschrieben und verwendet die entsprechenden Reaktanten, so erhält man das obengenannte Produkt mit einem Schmelzpunkt von 97 bis 99°C.

Beispiele 5 bis 16

Verfährt man wie in Beispiel 1 beschrieben und verwendet die Phosphorsäuredichloride und Phenole wie unten beschrieben, so erhält man weitere Produkte der Formel I, in der R, $R^1$ und $R^2$ die folgende Bedeutung haben:

| Beispiel No. | R | $R^1$ | $R^2$ |
|---|---|---|---|
| 5 | t-Butyl | 4-t-Butyl | 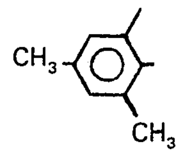 |
| 6 | Isopropyl | 4-Isopropyl | $C_6H_5$— |
| 7 | Methyl | 4-Methyl | $C_6H_5$— |
| 8 | t-Butyl | 4-t-Butyl | 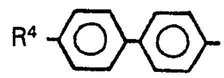 |
| 9 | t-Butyl | 4-t-Butyl | 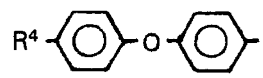 |
| 10 | Methyl | 4-t-Butyl | 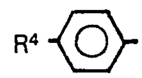 |
| 11 | t-Butyl | 4-t-Butyl | $CH_3$— |
| 12 | t-Butyl | 4-Methyl | N-$C_{18}H_{37}$— |
| 13 | t-Butyl | 4-Octadecyl | $C_6H_5$— |
| 14 | t-Butyl | 4-Octyl | 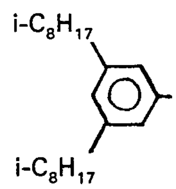 |
| 15 | t-Butyl | 3-Methyl | $C_6H_5$— |
| 16 | t-Butyl | t-Butyl | 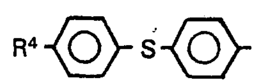 |

## Beispiel 17

Verarbeitungsstabilität von Polypropylen bei 260°C

*Ansatz:*

| | | |
|---|---|---|
| Profax 6801 | 100 | Teile |
| Ca-stearat | 0,1 | Teile |

Die Stabilisatoren werden in Form von Methylenchlorid-Lösungen in das Polypropylen gemischt. Nach Entfernen des Lösungsmittels durch Einengen im Vakuum, extrudiert man das Harz unter folgenden Bedingungen:

| bei 100 UPM | Temperatur (°C) |
|---|---|
| Zylinder Nr. 1 | 232 |
| Zylinder Nr. 2 | 246 |
| Zylinder Nr. 3 | 260 |
| Gussform Nr. 1 | 260 |
| Gussform Nr. 2 | 260 |

Der interne Druck wird durch einen Druckumwandler während der Extrusion bestimmt. Jeweils nach der 1., 3. und 5. Extrusion werden die Harzpellets zu 3,2 mm dicken Spritzgussplatten bei 193°C geformt. Die Vergilbung wird durch Messung des Yellowness Index nach ASTM D 1925—63T beurteilt.

Der Schmelzindex wird nach ASTM Methode 1238, Kondition L bestimmt. Der Schmelzindex ist direkt abhängig vom Umwandlerdruck und beide sind ein Mass für das Mol-Gewicht eines bestimmten Polymertyps. Die Ergebnisse folgen in Tabelle I.

TABELLE I

Verarbeitungsstabilität von Polypropylene bei 260°C

| Additiv | Umwandlerdruck ($kp/cm^2$) nach Extrusion | | | ** Smi (g/10 Min) nach Extusion | | | *** YI Farbe nach Extrusion | | |
|---|---|---|---|---|---|---|---|---|---|
| Gew.–% | 1 | 3 | 5 | 1 | 3 | 5 | 1 | 3 | 5 |
| kein | 76,99 | 59,06 | 46,05 | 0,73 | 2,01 | 4,25 | 4,6 | 6,5 | 7,9 |
| 0,1% Antioxydant A* | 85,42 | 73,47 | 65,39 | 0,42 | 1,04 | 1,25 | 6,7 | 8,6 | 10,5 |
| 0,05% Verbindung von Beispiel 1 | 100,19 | 89,64 | 78,04 | 0,22 | 0,31 | 0,51 | 4,6 | 6,1 | 7,0 |
| 0,05% Verbindung von Beispiel 4 | 97,03 | 88,59 | 80,15 | 0,23 | 0,37 | 0,74 | 4,9 | 5,6 | 6,1 |
| [0,1% Antioxydant A + 0,05% Verbindung von Beispiel 1] | 103,36 | 91,75 | 84,4 | 0,21 | 0,36 | 0,51 | 5,4 | 7,5 | 9,7 |
| [0,1% Antioxydant A + 0,05% Verbindung von Beispiel 4] | 102,3 | 91,75 | 81,21 | 0,23 | 0,36 | 0,70 | 5,4 | 6,9 | 9,7 |

* Antioxydant A Pentaerythrit-tetrakis-[3-(3′,5′-di-t-butyl-4′-hydroxyphenyl)-propionat]

** Schmelzindex

*** Yellowness Index

Führt man den Test mit den Verbindungen des Beispiels 3, 7, 12, 13 und 14 durch, so erhält man ähnliche Werte für die Stabilität des Polypropylens.

Die Lichtstabilität der obengenannten Gemische wird wird durch den Zusatz von 0,1% der folgenden UV-Absorbers weiter verbessert:

a) 2(2′-Hydroxy-3′,5′-di-t-butylphenyl)-5-chlorobenzotriazol
b) 2-Hydroxy-4-methoxy-5-sulfobenzophenontrihydrat
c) 2-Hydroxy-4-n-octoxybenzophenon
d) n-Butylamin[2,2′-thio-bis(4-t-octylphenolat)] Nickel(II)
e) p-Octylphenyl salicylat
f) 2,2′-Dihydroxy-4,4′-dimethoxybenzophenon
g) 2(2′-Hydroxy-5′-methylphenyl)-benzotriazol
h) Bis-(2,2,6,6-tetramethyl-4-piperidyl)-sebacat
i) Ni-Salz von O-Aethyl 3,5-di-t-butyl-4-hydroxybenzylphosphonsäure.

Beispiel 18

Verarbeitungsstabilität von Polypropylen bei 305°C

Beispiel 17 wird mit dem gleichen Ansatz ausgeführt, mit dem Unterschied, dass die Extrudertemperatur 305°C beträgt.

Die Extruderbedingung ist folgende: bei 100 UPM

| | Temperatur (°C) |
|---|---|
| Zylinder Nr. 1 | 260 |
| Zylinder Nr. 2 | 274 |
| Zylinder Nr. 3 | 305 |
| Gussform Nr. 1 | 305 |
| Gussform Nr. 2 | 305 |

Die Ergebnisse sind in Tabelle II zusammengestellt.

TABELLE II

| Additiv | Umwandlerdruck ($kp/cm^2$) nach Extrusion | | | Smi (g/10 Min) nach Extrusion | | | YI Farbe nach Extrusion | | |
|---|---|---|---|---|---|---|---|---|---|
| Gew.-% | 1 | 3 | 5 | 1 | 3 | 5 | 1 | 3 | 5 |
| keine | 53,77 | 25,31 | 15,82 | 1,63 | 9,40 | 20,60 | 4,3 | 4,8 | 5,8 |
| 0,1% Antioxydant A | 65,04 | 47,11 | 36,91 | 0,68 | 1,60 | 3,25 | 4,7 | 7,6 | 10,1 |
| 0,1% Verbindung von Beispiel 1 | 83,32 | 68,55 | 60,12 | 0,22 | 0,48 | 0,88 | 4,0 | 6,6 | 7,8 |
| [0.1% Antioxydant A + 0,05% Verbindung von Beispiel 1] | 81,91 | 73,83 | 66,43 | 0,16 | 0,35 | 0,66 | 5,1 | 6,2 | 9,2 |

Aehnliche Ergebnisse erhält man, wenn man an Stelle von Pentaerythrit-tetrakis-[3-(3',5'-di-t-butyl-4-hydroxyphenyl)-propionat] (Antioxydant A) die folgenden Antioxydantien verwendet:

Octadecyl β-(3,5-di-t-butyl-4-hydroxyphenyl)-propionat, Thiodiglycol bis-[3-(3,5-di-t-butyl-4-hydroxyphenyl)-propionat], N,N'-Bis-β-(3,5-di-t-butyl-4-hydroxyphenyl)-propionylhydrazin, Di-2-octadecyl-(3,5-di-t-butyl-4-hydroxybenzyl)-phosphonat.

### Beispiel 19

Stabilisieren von Polyäthylenterephthalat

1% der Verbindung aus Beispiel 1 wird als Stabilisator bei 270°C unter zu flüssigem Polyäthylenterephthalat gerührt. Das entstandene Polymer wird mit festem $CO_2$ so lange gemählen, bis die Teilchengrösse weniger als 100 μ beträgt. Die Temperatur, bei der die Oxydation stattfindet, wird folgendermassen bestimmt:

Ca. 1 mg Polyester-Pulver, hergestellt in der oben beschriebenen Weise, wird in die Kammer des Perkin-Elmer Differential Scanning Colorimeter gefüllt und unter $N_2$ auf 225°C erhitzt. Der $N_2$-Zufluss wird gestoppt und Sauerstoff mit einer Geschwindigkeit von 15 ml/Minute zugeführt und so lange um 1°C/Minute erhitzt, bis Reaktionswärme registriert wird. Die Oxydationstemperatur des stabilisierten Pulvers liegt höher als desjenigen ohne Stabilisator, was eindeutig den verbesserten Widerstand gegenüber Sauerstoffeinwirkung zeigt. Auch die Farbe des stabilisierten Polyesters blieb besser gegenüber dem ohne Zusatz.

### Beispiel 20

Stabilisieren von Lexan Polycarbonat

Lexan Polycarbonat stellt man durch Vermischen des Grundharzes mit 0,1% der Verbindung aus Beispiel 1 in einem Waring-Mixer her. Das Grundharz enthält ferner 0,1% Octadecyl β-(3,5-di-t-butyl-4-hydroxyphenyl)-propionat. Das entstandene Harz wird spritzgegossen, in Späne geschnitten und in den Schmelzindexapparat gefüllt. Es wird von dort nach 30 Minuten Aufenthalt bei 350°C entfernt, zu Platten gepresst und auf die Farbe geprüft. Man stellt fest, dass diejenigen Exemplare, welche beide

Stabilisatoren enthalten, wesentlich hellere Farben haben als diejenigen ohne Octadecyl β-(3,5-di-t-butyl-4-hydroxyphenyl)-propionat.

Beispiel 21

Stabilisieren von Acrylnitril-Butadien-Styrol-Polymer (ABS)

Um ABS herzustellen, wurde der folgende Ansatz während 7 1/2 Stunden auf 80°C erhitzt:

| | | | |
|---|---|---|---|
| Harz A: | Butadien | 10 | Teile |
| | Acrylnitril | 24 | Teile |
| | Styrol | 65,8 | Teile |
| | 2,2'-Azobisisobutyronitril | 0,1 | Teile |
| | | 99,9 | Teile |

Harz B: Dieses Harz wurde analog zu Harz A hergestellt, mit dem einzigen Unterschied, dass es zusätzlich 0,25 Gew.-% der Verbindung aus Beispiel 1 enthält.

Die Oxydationstemperatur beider Harze wurde mit dem Differential Scanning Colorimeter (DSC) folgenderweise bestimmt:

Jeweils 10 mg der Harze wurde in das DSC gefüllt und mit einer Intensität von 20°C/Minute erhitzt, während Sauerstoff mit einer Geschwindigkeit von 250 ml/Minute zufloss. Die Temperaturen, bei denen jeweils Reaktionswärme entstand, wurden registriert.

| | DSC Temperatur (°C) bis Reaktionswärme |
|---|---|
| Harz A | 185 |
| Harz B | 192 |

Das Ergebnis zeigt die ausgezögerte Oxydation des ABS-Harzes infolge des Stabilisators aus Beispiel 1.

Beispiel 22

Verarbeitungsstabilität von HMW-HDPE (high molecular weight-high density polyethylen)

Als HMW-HDPE wurde Union Carbide 10780-64A verwendet. Der Stabilisator wurde in Form von Methylenchlorid-Lösung beigefügt und anschliessend im Vakuum eingeengt. Das so entstandene Harz wurde bei 316°C extrudiert und der Schmelzindex (Smi) nach ASTM D 1238—65T sowie der Yellowness Index (YI) nach ASTM D 1925—63T bestimmt. Die Ergebnisse sind aus Tabelle III ersichtlich.

TABELLE III

Verfahrensstabilitat von HMW–HDPE bei 316°C.

| Additiv Gew.–% | Smi (g/10 Min) nach Extrusion | | | YI Farbe nach Extrusion | | |
|---|---|---|---|---|---|---|
| | 1 | 3 | 5 | 1 | 3 | 5 |
| Kein | 3,8 | 3,1 | 2,9 | –0,7 | 1,2 | 1,9 |
| 0,1% Antioxydant B** | 4,4 | 4,1 | 4,0 | –1,2 | 2,5 | 3,5 |
| 0,1% Antioxydant A* | 4,4 | 4,1 | 4,2 | –0,8 | 5,7 | 9,5 |
| [0,05% Antioxydant A + 0,05% Verbindung von Beispiel 1] | 4,9 | 4,3 | 4,1 | –4,9 | –2,3 | –1,4 |
| [0,05% Antioxydant B + 0,05% Verbindung von Beispiel 1] | 4,8 | 3,6 | 3,5 | –5,1 | –3,7 | –3,2 |

* Antioxydant A ist in der Tabelle I definiert.

** Antioxydant B ist Octadecyl β-(3,5-di-t-butyl-4-hydroxyphenyl)-propionat.

Beispiel 23

Die Verbindung aus Beispiel 1 ist wirksam in der Verbesserung der Anfangsfarbe von HDPE (high density polyethylene), das in Form von 3,2 mm dicken Platten geprüft wurde.

| Ansatz: | Gew.-% |
|---|---|
| HDPE (USI-LR-334) | 98,725 |
| $TiO_2$ | 1,0 |
| Antioxydant A | 0,075 |
| Lichtstabilisator X | 0,1 |
| Lichtstabilisator Y | 0,1 |
| | 100,000 |

Antioxydant A =wie vorhin definiert
Lichtstabilisator X=Bis(2,2,6,6-tetramethyl-4-piperidyl)-sebacat
Lichtstabilisator Y=2-(2′-Hydroxy-3′,5′-di-t-amylphenyl)-benzotriazol

| | Anfangsfarbe Yellowness Index |
|---|---|
| Ansatz | 11,4 |
| Ansatz + 0,075% Verbindung aus Beispiel 1 | 6,8 |

**Patentansprüche**

1. Phosphonite der Formel

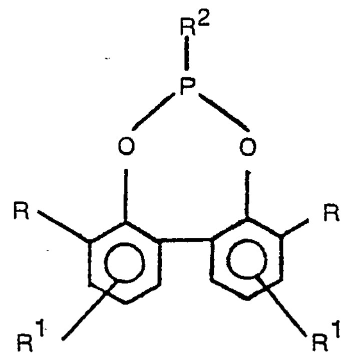

worin R $C_1$—$C_{18}$ Alkyl, $R^1$ Wasserstoff oder $C_1$—$C_{18}$ Alkyl und $R^2$ $C_1$—$C_{18}$ Alkyl, Phenyl mit 1 bis 3 Alkylgruppen substituiertes Phenyl, wobei die Alkylgruppen 1 bis 8 C-Atome enthalten, oder eine Gruppe der Formel

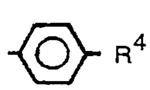 , 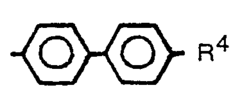 oder 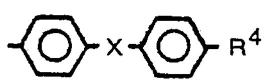 ,

worin $R^4$ die Formel

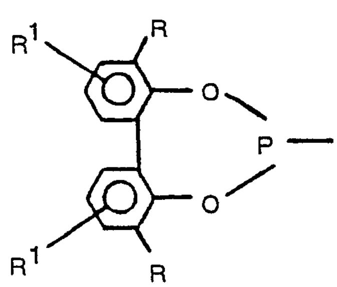

und X = O oder S bedeutet.

2. Verbindungen gemäss Anspruch 1, worin R ein $\alpha$-verzweigtes Alkyl mit 3 bis 8 C-Atomen, $R^1$ $C_1$—$C_8$ Alkyl und $R^2$ Methyl, Phenyl oder Alkyl-substituiertes Phenyl, worin das Alkyl 1 bis 8 C-Atome hat, bedeutet.

3. Verbindungen gemäss Anspruch 2, worin R t-Butyl, t-Amyl oder t-Octyl bedeutet.

4. Verbindungen gemäss Anspruch 3, worin $R^2$ Phenyl ist.

5. Verbindung gemäss Anspruch 1, (4,4',6,6'-Tetra-t-butyl-2,2'-biphenylen)-phenylphosphonit.

6. Verbindung gemäss Anspruch 1, (4,4',6,6'-Tetra-t-amyl-2,2'-biphenylen)-phenylphosphonit.

7. Verbindung gemäss Anspruch 1, (4,4',6,6'-Tetra-t-octyl-2,2'-biphenylen)-phenylphosphonit.

8. Gemisch enthaltend ein organisches Material, welches durch Oxydation, Wärme oder Licht abbaubar ist, und eine Verbindung gemäss Anspruch 1 als Stabilisator.

9. Gemisch gemäss Anspruch 8, worin das organische Material ein Polymer ist.

10. Gemisch gemäss Anspruch 8, worin das Polymer ein Polyolefin, Homo- oder Copolymer ist.

11. Ein Polyolefin, Homo- oder Copolymer stabilisiert mit einer Verbindung gemäss Anspruch 3.

12. Gemisch gemäss Anspruch 9, worin ein Aethylen oder Propylen, Homo- oder Copolymer mit (4,4',6,6'-Tetra-t-butyl-2,2'-biphenylen)-phenylphosphonit oder (4,4',6,6'-Tetra-t-amyl-2,2'-biphenylen)-phenylphosphonit stabilisiert ist.

**Claims**

1. A phosphonite of the formula

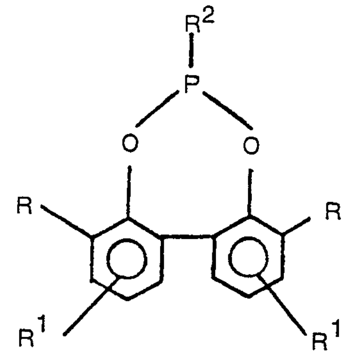

(I)

wherein R is $C_1$—$C_{18}$-alkyl, $R^1$ is hydrogen or $C_1$—$C_{18}$-alkyl, and $R^2$ is $C_1$—$C_{18}$-alkyl, phenyl, phenyl substituted by 1 to 3 alkyl groups, each containing 1 to 8 C atoms, or $R^2$ is a group of the formula

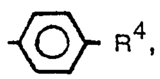 , 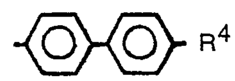 or 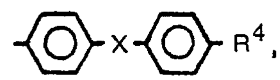 ,

wherein $R^4$ corresponds to the formula

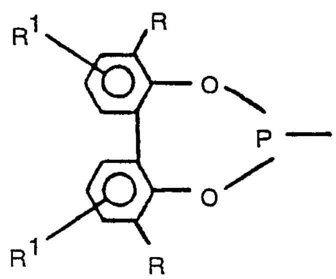

and X is oxygen or sulfur.

2. A compound according to Claim 1, wherein R is an $\alpha$-branched alkyl group having 3 to 8 C atoms, $R^1$ is $C_1$—$C_8$-alkyl, and $R^2$ is methyl, phenyl, or phenyl which is substituted by alkyl, where alkyl has 1 to 8 C atoms.

3. A compound according to Claim 2, wherein R is t-butyl, t-amyl or t-octyl.

4. A compound according to Claim 3, wherein $R^2$ is phenyl.

5. A compound according to Claim 1, namely: (4,4',6,6'-tetra-t-butyl-2,2'-biphenylene)-phenylphosphonite.

6. A compound according to Claim 1, namely: (4,4',6,6'-tetra-t-amyl-2,2'-biphenylene)-phenylphosphonite.

7. A compound according to Claim 1, namely: (4,4',6,6'-tetra-t-octyl-2,2'-biphenylene)-phenylphosphonite.

8. A mixture containing an organic material which is degradable by oxidation, heat or light, and a compound according to Claim 1 as a stabiliser.

9. A mixture according to Claim 8, wherein the organic material is a polymer.

10. A mixture according to Claim 8, wherein the polymer is a polyolefin, homopolymer or copolymer.

11. A polyolefin, homopolymer or copolymer stabilised with a compound according to Claim 3.

12. A mixture according to Claim 9, wherein an ethylene or propylene homopolymer or copolymer is stabilised with (4,4',6,6'-tetra-t-butyl-2,2'-biphenylene)-phenylphosphonite or (4,4',6,6'-tetra-t-amyl-2,2'-biphenylene)-phenylphosphonite.

**Revendications**

1. Phosphonites répondant à la formule I

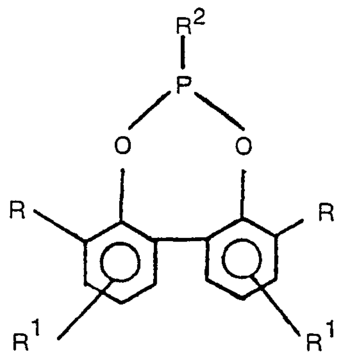

(I)

dans laquelle

R représente un alkyle en $C_1$—$C_{18}$,

$R^1$ représente l'hydrogène ou un alkyle en $C_1$—$C_{18}$ et

$R^2$ représente un alkyle en $C_1$—$C_{18}$, un phényle, un phényle porteur de 1 à 3 radicaux alkyles en $C_1$—$C_8$, ou un radical répondant à l'une des formules

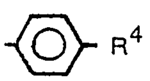, 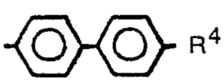 et 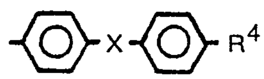,

dans lesquelles $R^4$ est un radical de formule:

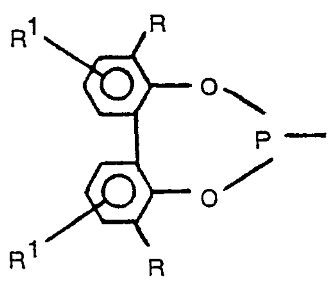

et X représente O ou S.

2. Composés selon la revendication 1, dans lesquels R représente un alkyle ramifié en $\alpha$ contenant de 3 à 8 atomes de carbone, $R^1$ représente un radical alkyle en $C_1$—$C_8$ et $R^2$ représente un radical méthyle, un radical phényle ou un radical phényle porteur d'un alkyle en $C_1$—$C_8$.

3. Composés selon la revendication 2, dans lesquels R représente un radical tert-butyle, tert-pentyle ou tert-octyle.

4. Composés selon la revendication 3, dans lesquels $R^2$ représente un radical phényle.

5. Composé selon la revendication 1, en l'espèce le phénylphosphonite de tétrakis-tert-butyl-4,4',6,6' biphénylylène-2,2'.

6. Composé selon la revendication 1, en l'espèce le phénylphosphonite de tétrakis-tert-pentyl-4,4',6,6' biphénylylène.

7. Composé selon la revendication 1, en l'espèce le phénylphosphonite de tétrakis-tert-octyl-4,4',6,6' biphénylylène-2,2'.

8. Mélange contenant une matière organique dégradable sous l'effet de l'oxydation, de la chaleur ou de la lumière et un composé selon la revendication 1 comme stabilisant.

9. Mélange selon la revendication 8, dans lequel la matière organique est un polymère.

10. Mélange selon la revendication 8, dans lequel le polymère est une polyoléfine, homo- ou copolymère.

11. Polyoléfine, homo- ou copolymère, qui a été stabilisée à l'aide d'un composé selon la revendication 3.

12. Mélange selon la revendication 9, dans lequel un homo- ou copolymère de l'éthylène ou du propylène est stabilisé par le phénylphosphonite de tétrakis-tert-butyl-4,4',6,6' biphénylylène 2,2' ou le phénylphosphonite de tétrakis-tert-pentyl-4,4',6,6' biphénylylène-2,2'.